# FASCICULE DE BREVET EUROPEEN

(11) **EP 3 111 111 B1**
(45) Date de publication et mention de la délivrance du brevet: **12.09.2018**
(21) Numéro de dépôt: 15707698.5
(22) Date de dépôt: 05.02.2015
(51) Int. Cl.: F16H 57/08, F16H 55/14, F16H 57/00, F16H 48/10, F16H 55/17

(54) **TRAIN ÉPICYCLOÏDAL, NOTAMMENT POUR UNE TRANSMISSION D'UN VÉHICULE AUTOMOBILE**
EPIZYKLISCHES ZAHNRADGETRIEBE, INSBESONDERE FÜR EIN KRAFTFAHRZEUGGETRIEBE
EPICYCLIC GEARTRAIN, NOTABLY FOR A MOTOR VEHICLE TRANSMISSION

(30) Priorité: 28.02.2014 FR 1451629
(43) Date de publication de la demande: 04.01.2017
(73) Titulaire: Technoboost, 75116 Paris (FR)
(72) Inventeur: GAGLIARDINI, Laurent, F-92320 Chatillon (FR); BALENGHIEN, Olivier, F-93340 Le Raincy (FR); GIANNONI, Marc, F-75009 Paris (FR)
(74) Mandataire: Rosenberg, Muriel Sylvie
(86) Numéro de dépôt international: PCT/FR2015/050277
(87) Numéro de publication internationale: WO 2015/128559

(56) Documents cités:
- EP-A1- 0 851 149
- DE-A1- 10 230 861
- FR-A- 556 053
- JP-A- 2001 295 896
- US-A1- 2010 004 085

## Description

La présente invention concerne un train épicycloïdal, notamment pour une transmission d'un véhicule automobile.

### ARRIÈRE-PLAN DE L'INVENTION

On sait qu'un train épicycloïdal comprend un arbre planétaire intérieur ayant une denture annulaire extérieure s'étendant autour d'un axe de rotation, un arbre planétaire extérieur comportant une cloche dans laquelle est montée une couronne ayant une denture coaxiale à l'arbre planétaire intérieur, et des satellites montés sur un porte-satellites pour tourner autour de l'axe de rotation des arbres planétaires en engrenant avec l'arbre planétaire intérieur et avec la couronne de l'arbre planétaire extérieur.

On sait également que pour compenser le caractère hyperstatique de cette configuration, la couronne doit être montée flottante et les dentures doivent être réalisées avec un jeu suffisant pour permettre un dégagement des dentures lors d'une inversion de couple ou dans les phases de fonctionnement pour lesquelles le couple transmis est très faible.

Une telle structure est génératrice de bruit résultant de chocs entre la couronne et la cloche.

Pour minimiser ce bruit il est connu de maintenir le train épicycloïdal en contrainte par une stratégie de commande spécifique des organes couplés aux différents éléments du train épicycloïdal. Ceci implique toutefois la mise en place d'une structure environnementale complexe pour assurer un maintien des contraintes appropriées. Pour minimiser le bruit il est également connu d'utiliser une huile de boite ayant une viscosité élevée mais cette viscosité entraîne une augmentation de la consommation de carburant qui est incompatible avec les contraintes de rendement qui sont actuellement recherchées pour les véhicules automobiles.

Le document JP-A-2001 295896 divulgue un train épicycloïdal conforme au préambule de la revendication 1.

### OBJET DE L'INVENTION

Un but de l'invention est de proposer un train épicycloïdal comportant des moyens simples de réduction du bruit sans réduire les performances du train épicycloïdal.

### BRÈVE DESCRIPTION DE L'INVENTION

En vue de la réalisation de ce but, on propose selon l'invention un train épicycloïdal comprenant : un arbre planétaire intérieur ayant une denture annulaire extérieure s'étendant autour d'un axe de rotation, un arbre planétaire extérieur comportant une cloche dans laquelle est montée une couronne ayant une denture coaxiale à l'arbre planétaire intérieur, des satellites montés sur un porte-satellites pour tourner autour de l'axe de rotation des arbres planétaires en engrenant avec l'arbre planétaire intérieur et avec la couronne de l'arbre planétaire extérieur, le train épicycloïdal comportant un premier organe élastique interposé entre la cloche et la couronne pour absorber un effort radial entre la cloche et la couronne, le train épicycloïdal comportant un second organe élastique interposé entre la cloche et la couronne pour absorber un effort axial entre la cloche et la couronne, le second organe élastique étant un second joint torique, le train épicycloïdal étant remarquable en ce que le second joint torique est emprisonné entre deux bagues.

Ainsi, l'intensité du choc entre la cloche et la couronne est minimisée par l'amortissement résultant de l'écrasement du premier organe élastique de sorte que le bruit en résultant est lui-même minimisé. En outre, grâce au second organe élastique, on élimine non seulement les chocs résultant d'un déplacement radial de la cloche et la couronne l'une par rapport à l'autre mais on élimine également le bruit résultant des chocs selon une direction axiale du train épicycloïdal.

Selon une version avantageuse de l'invention, le premier organe élastique est un joint torique, de préférence monté dans une gorge annulaire réalisée dans la cloche et/ou la couronne.

Selon un autre aspect avantageux de l'invention, le premier organe élastique comporte plusieurs joints toriques espacés axialement. On évite ainsi un basculement de la couronne et la cloche l'une par rapport à l'autre lors de l'écrasement du premier organe élastique, ce qui minimise encore l'intensité des chocs entre la cloche et la couronne.

Selon une caractéristique particulière, le second organe élastique est précontraint selon une force suffisante pour maintenir en permanence un effort d'appui axial sur la couronne.

Selon encore d'autres caractéristiques de l'invention, le second joint torique prend appui sur une face de la couronne perpendiculaire à l'axe de rotation ; de préférence les bagues ont des sections en L inversées l'une par rapport à l'autre.

### BRÈVE DESCRIPTION DES DESSINS

D'autres caractéristiques et avantages de l'invention apparaîtront encore à la lecture de la description qui suit d'un mode de réalisation préféré non limitatif de l'invention en référence aux figures ci-jointes parmi lesquelles:

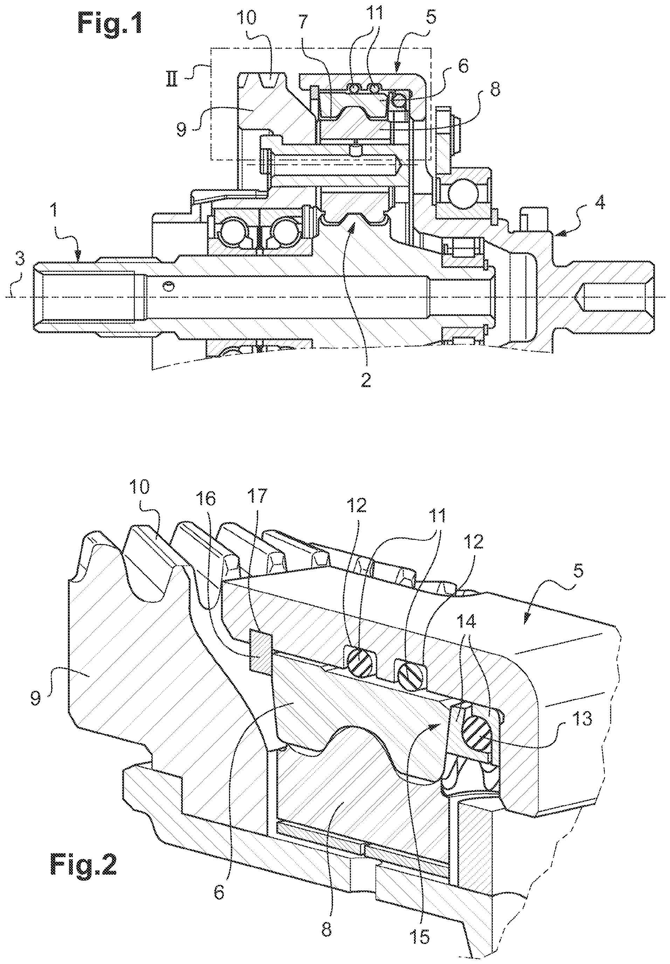

- La figure 1 est une vue partielle d'un train épicycloïdal selon l'invention en coupe selon un plan axial des arbres planétaires,
- La figure 2 est une vue en perspective agrandie de l'encadré II de la figure 1.

### DESCRIPTION DETAILLÉE DE L'INVENTION

En référence aux figures, le train épicycloïdal selon l'invention comporte de façon connue en soi un arbre planétaire intérieur 1 ayant une denture annulaire extérieure 2 s'étendant autour d'un axe de rotation 3, un arbre planétaire extérieur 4 comportant une cloche 5 dans laquelle est montée une couronne 6 ayant une denture 7 coaxiale à l'arbre planétaire intérieur, et des satellites 8 montés sur un porte-satellites 9 pour tourner autour de l'axe de rotation des arbres planétaires en engrenant avec l'arbre planétaire intérieur et avec la couronne de l'arbre planétaire extérieur.

Dans le cas d'une utilisation du train épicycloïdal dans une transmission d'un véhicule automobile, le porte-satellites 9 est pourvu d'une denture 10 engrenant avec l'arbre de sortie (non représenté) de la boîte de vitesses du véhicule automobile tandis que les arbres planétaires sont raccordés aux roues motrices du véhicule.

Selon le mode de réalisation préféré de l'invention illustré, le train épicycloïdal comporte deux joints toriques 11 montés dans des gorges annulaires 12 réalisées dans la face latérale interne de la cloche 5 et espacées l'une de l'autre selon une direction axiale du train épicycloïdal, les gorges 12 ayant une profondeur inférieure à la section des joints toriques 11 de façon que les joints toriques 11 réalisent un amortissement du mouvement entre la couronne 6 et la cloche 5, de sorte que les chocs radiaux entre la couronne 6 et la cloche 5 sont minimisés.

Par ailleurs, le train épicycloïdal comporte un joint torique 13 pris en sandwich entre deux bagues 14 ayant des sections en L inversées. L'ensemble ainsi constitué est mis en appui sur une face 15 de la couronne 6 perpendiculaire à l'axe de rotation 3 et est maintenu selon une précontrainte par un circlip 16 encastré dans une gorge 17 de la cloche et prenant appui sur une face de la couronne 6 opposée au joint torique 13. Le joint torique 13 absorbe ainsi un effort axial entre la cloche et la couronne.

Bien entendu l'invention n'est pas limitée au mode de réalisation décrit et on peut y apporter des variantes de réalisation sans sortir du cadre de l'invention telle que définie par les revendications. En particulier, bien que l'invention ait été décrite en relation avec un mode de réalisation du train épicycloïdal comportant trois joints toriques pour assurer l'amortissement radial et axial, l'amortissement radial peut être exercé par un seul joint torique 12, ou par d'autres organes élastiques interposés entre la couronne et la cloche, par exemple des barrettes élastiques régulièrement réparties autour de l'axe de rotation.

## Revendications

1. Train épicycloïdal comprenant : un arbre planétaire intérieur (1) ayant une denture annulaire (2) extérieure s'étendant autour d'un axe de rotation (3), un arbre planétaire extérieur (4) comportant une cloche (5) dans laquelle est montée une couronne (6) ayant une denture (7) coaxiale à l'arbre planétaire intérieur, et des satellites (8) montés sur un porte-satellites pour tourner autour de l'axe de rotation des arbres planétaires en engrenant avec l'arbre planétaire intérieur (1) et avec la couronne (6) de l'arbre planétaire extérieur, ledit train épicycloïdal comportant un premier organe élastique (11) interposé entre la cloche (5) et la couronne (6) pour absorber un effort radial entre la cloche et la couronne, ledit train épicycloïdal comportant un second organe élastique (13) interposé entre la cloche (5) et la couronne (6) pour absorber un effort axial entre la cloche et la couronne, le second organe élastique (13) étant un second joint torique, ledit train épicycloïdal étant **caractérisé en ce que** le second joint torique (13) est emprisonné entre deux bagues (14).

2. Train épicycloïdal selon la revendication 1, **caractérisé en ce que** le premier organe élastique (11) est un premier joint torique.

3. Train épicycloïdal selon la revendication 2, **caractérisé en ce que** le premier joint torique (11) est monté dans une gorge annulaire (12) réalisée dans la cloche et/ou la couronne.

4. Train épicycloïdal selon la revendication 1, **caractérisé en ce que** le premier organe élastique (11) comporte plusieurs joints toriques espacés axialement.

5. Train épicycloïdal selon la revendication 1, **caractérisé en ce que** le second organe élastique (13) est précontraint selon une force suffisante pour maintenir en permanence une force d'appui axial sur la couronne.

6. Train épicycloïdal selon la revendication 1, **caractérisé en ce que** le second joint torique (13) prend appui sur une face de la couronne perpendiculaire à l'axe de rotation.

7. Train épicycloïdal selon la revendication 1, **caractérisé en ce que** les bagues (14) ont des sections en L inversés.

## Patentansprüche

1. Epizyklisches Zahnradgetriebe, das Folgendes umfasst: eine innere Planetenwelle (1), die eine äußere ringförmige Verzahnung (2) hat, die sich um eine Rotationsachse (3) erstreckt, eine äußere Planetenwelle (4), die eine Kuppel (5) umfasst, in der ein Kranz (6) montiert ist, der eine Verzahnung (7) hat, die zu der inneren Planetenwelle koaxial ist, und Satellitenräder (8), die auf einen Satellitenträger montiert sind, um um die Rotationsachse der Planetenwellen zu drehen, indem sie in die innere Planetenwelle (1) und in den Kranz (6) der äußeren Planetenwelle eingreifen, wobei das epizyklische Zahnradgetriebe ein erstes elastisches Element (11) umfasst, das zwischen die Kuppel (5) und den Kranz (6) eingefügt ist, um eine radiale Kraft zwischen der Kuppel und dem Kranz zu absorbieren, wobei das epizyklische Zahnradgetriebe ein zweites elastisches Element (13) umfasst, das zwischen die Kuppel (5) und den Kranz (6) eingefügt ist, um eine axiale Kraft zwischen der Kuppel und dem Kranz zu absorbieren, wobei das zweite elastische Element (13) eine zweite O-Ringdichtung ist, epizyklisches Zahnradgetriebe **dadurch gekennzeichnet, dass** die zweite O-Ringdichtung (13) zwischen zwei Ringen (14) gefangen ist.

2. Epizyklisches Zahnradgetriebe nach Anspruch 1, **dadurch gekennzeichnet, dass** das erste elastische Element (11) eine erste O-Ringdichtung ist.

3. Epizyklisches Zahnradgetriebe nach Anspruch 2, **dadurch gekennzeichnet, dass** die erste O-Ringdichtung (11) in eine ringförmige Nut (12), die in der Kuppel und/oder dem Kranz hergestellt ist, montiert ist.

4. Epizyklisches Zahnradgetriebe nach Anspruch 1, **dadurch gekennzeichnet, dass** das erste elastische Element (11) mehrere axial beabstandete O-Ringdichtungen umfasst.

5. Epizyklisches Zahnradgetriebe nach Anspruch 1, **dadurch gekennzeichnet, dass** das zweite elastische Element (13) gemäß einer ausreichenden Kraft vorgespannt ist, um ständig eine axiale Auflagekraft auf dem Kranz aufrecht zu erhalten.

6. Epizyklisches Zahnradgetriebe nach Anspruch 1, **dadurch gekennzeichnet, dass** die zweite O-Ringdichtung (13) auf einer Seite des Kranzes, die zu der Rotationsachse senkrecht ist, aufliegt.

7. Epizyklisches Zahnradgetriebe nach Anspruch 1, **dadurch gekennzeichnet, dass** die Ringe (14) Querschnitte in umgedrehten L haben.

## Claims

1. Epicyclic geartrain comprising: an internal planetary shaft (1) having an external annular tooth set (2) extending about an axis of rotation (3), an external planetary shaft (4) comprising a bell housing (5) in which is mounted a crown gear (6) having a tooth set (7) coaxial with the internal planetary shaft, and planet pinions (8) mounted on a planet carrier to rotate about the axis of rotation of the planetary shafts while meshing with the internal planetary shaft (1) and with the crown gear (6) of the external planetary shaft, said epicyclic geartrain comprising a first elastic member (11) interposed between the bell housing (5) and the crown gear (6) in order to absorb a radial load between the bell housing and the crown gear, said epicyclic geartrain comprising a second elastic member (13) interposed between the bell housing (5) and the crown gear (6) in order to absorb an axial force between the bell housing and the crown gear, the second elastic member (13) being a second O-ring, said epicyclic geartrain being **characterized in that** the second O-ring (13) is trapped between two rings (14).

2. Epicyclic geartrain according to Claim 1, **characterized in that** the first elastic member (11) is a first O-ring.

3. Epicyclic geartrain according to Claim 2, **characterized in that** the first O-ring (11) is mounted in an annular groove (12) created in the bell housing and/or the crown gear.

4. Epicyclic geartrain according to Claim 1, **characterized in that** the first elastic member (11) comprises a plurality of O-rings spaced axially.

5. Epicyclic geartrain according to Claim 1, **characterized in that** the second elastic member (13) is biased according to a force sufficient force to maintain a permanent axial bearing force on the crown gear.

6. Epicyclic geartrain according to Claim 1, **characterized in that** the second O-ring (13) bears on a face of the crown gear perpendicular to the axis of rotation.

7. Epicyclic geartrain according to Claim 1, **characterized in that** the rings (14) have inverted L-shaped sections.
